**Europäisches Patentamt**

**European Patent Office**

**Office européen des brevets**

(19)

(11) Veröffentlichungsnummer: **0 013 658**
**B1**

(12) **EUROPÄISCHE PATENTSCHRIFT**

(45) Veröffentlichungstag der Patentschrift:
18.05.83

(51) Int. Cl.³: **H 02 K 9/00**

(21) Anmeldenummer: **80730001.7**

(22) Anmeldetag: **03.01.80**

(54) **Eigenbelüftete elektrische Maschine.**

(30) Priorität: **10.01.79 DE 7900792 U**

(43) Veröffentlichungstag der Anmeldung:
**23.07.80 Patentblatt 80/15**

(45) Bekanntmachung des Hinweises auf die Patenterteilung:
**18.05.83 Patentblatt 83/20**

(84) Benannte Vertragsstaaten:
**CH FR SE**

(56) Entgegenhaltungen:
**CH-A-202943**
**CH-A-216232**
**CH-A-229946**
**DE-A-1538803**
**DE-A-2558405**
**DE-C-616902**
**DE-C-640886**
**FR-A-2282183**
**GB-A-341164**
**US-A-1578918**

(73) Patentinhaber: **SIEMENS AKTIENGESELLSCHAFT,**
**Berlin und München Wittelsbacherplatz 2,**
**D-8000 München 2 (DE)**

(72) Erfinder: **Zwarg, Günter, Waitzstrasse 17,**
**D-1000 Berlin 12 (DE)**
Erfinder: **Losensky, Erich, Heilmannring 55a,**
**D-1000 Berlin 13 (DE)**

Eigenbelüftete elektrische Maschine

Die Erfindung bezieht sich auf eine eigenbelüftete elektrische Maschine, bei welcher auf jeder Maschinenseite der Wickelkopf der Ständerwicklung durch einen Lüfter mit einem gasförmigen Kühlmittel beaufschlagt wird, der auf eine mit dem Läufer verbundenen hohlen Nabe angeordnet ist, die sich, insbesondere über Rippen, auf dem Läufer abstützt und deren Innendurchmesser grösser als der Durchmesser ist, auf dem axiale Kühlkanäle des Läufers liegen, die radial verlaufende Kühlkanäle im Läufer- und Ständerblechpaket mit dem von aussen angesaugten Kühlmittel versorgen, das nach Durchtritt des Läufers über den Luftspalt in die radialen Kühlkanäle des Ständerblechpaketes übertritt.

Eine derartige eigenbelüftete elektrische Maschine ist aus der CH-A-216232 bekannt. Bei dieser bekannten Maschine tritt die vom Aussenraum in die Maschine kommende Kühlluft auf jeder Maschinenseite zunächst in eine hohle Nabe ein, die an der Stirnfläche des Läufers befestigt ist. Der Innendurchmesser dieser Nabe ist grösser als der Durchmesser, auf dem axiale Kühlkanäle des Läufers liegen, in welche die Kühlluft dann übertritt. Diese axialen Kühlkanäle stehen mit radialen Kühlkanälen im Läuferblechpaket in Verbindung und die Kühlluft durchläuft dann diese. Sie tritt dann über den Luftspalt in gegenüberstehende radiale Kühlkanäle des Ständerblechpaketes ein und tritt auf dem Rücken des Ständerblechpaketes aus. Die Kühlluft wird nun, durch das Maschinengehäuse und Luftführungsschilde geleitet, zum Wickelkopfraum umgelenkt, den sie dann durchströmt. Hinter dem Wickelkopfraum befindet sich der als Radiallüfter ausgebildete Lüfter, der auf der hohlen Nabe angeordnet ist. Dieser Lüfter saugt den gesamten Kühlluftstrom an und drückt ihn in den Aussenraum hinaus. Es handelt sich bei der bekannten Maschine also um eine Saugbelüftung, bei welcher der Kühlluftstrom in Reihenschaltung durch die Maschine strömt. Der Wickelkopf der Ständer- und Läuferwicklung wird als allerletztes gekühlt, d. h. die ihn kühlende Kühlluft ist bereits durch die Läufer- und Ständerblechpakete erwärmt. Es ist zwar in der Maschine eine zusätzliche Lufteintrittsöffnung in der Mitte des Ständerrückens vorgesehen, durch welche zusätzliche Kühlluft ins Maschineninnere tritt, die dann sofort dem Wickelkopfraum zugeführt wird, jedoch vermengt sich diese kalte Kühlluft mit der erwärmten aus den Blechpaketen austretenden Kühlluft, so dass die Wickelköpfe nach wie vor mit erwärmter Kühlluft beaufschlagt werden.

Hinter dem Wickelkopfraum liegt der auf der hohlen Nabe befestigte Lüfter, der den gesamten Kühlluftstrom ansaugt und über die Luftaustrittsöffnung ins Freie leitet. Der Lüfter muss also für den gesamten Kühlluftstrom ausgelegt sein, was eine verhältnismässig grosse Lüfterleistung mit entsprechend hohen Ventilationsverlusten bedingt. Da der Lüfter als Radiallüfter ausgebildet ist, ist sein Lufteintrittsquerschnitt verhältnismässig klein, wodurch zusätzliche Druckverluste auftreten. Ausserdem ergibt sich aus der Wirkungsweise des Lüfters als Sauglüfter, dass die den Wickelkopfraum durchströmende Kühlluft eine verhältnismässig geringe Geschwindigkeit hat, wodurch der Wärmeübergang beeinträchtigt ist.

Durch die Erfindung soll die Kühlung einer derartigen eigenbelüfteten elektrischen Maschine verbessert werden. Zur Lösung dieser Aufgabe ist eine eigenbelüftete elektrische Maschine der eingangs beschriebenen Art gemäss der Erfindung so ausgebildet, dass der als Axiallüfter ausgebildete Lüfter hinter den Kühlmitteleintrittsöffnungen liegt und nur den zur Kühlung des Wickelkopfes der Ständerwicklung und gegebenenfalls der Läuferwicklung notwendigen Kühlmittelstrom fördert, der nach dem Durchtritt über den Wickelkopf in den Aussenraum austritt, und dass der durch die axialen Kühlkanäle des Läufers geführte, getrennte Kühlmittelstrom am Ständerrücken in den Aussenraum übertritt.

Für die Belüftung der Maschine sind zwei parallel geschaltete, eindeutig getrennte Kühlgasströme vorgesehen, einer für Läufer- und Ständerblechpaket, der andere für den Wickelkopf. Der Wickelkopf wird dadurch direkt mit kaltem Kühlgas beaufschlagt. Da der Lüfter als Drucklüfter arbeitet, wird zur Kühlung des Wickelkopfes ausserdem noch die dynamische Geschwindigkeitskomponente der Kühlgasströmung zur Intensivierung der Kühlung ausgenutzt. Der Lüfter selbst ist nur für den Kühlstrom des Wickelkopfes ausgelegt, wodurch seine Leistung und entsprechend die Ventilationsverluste klein bleiben. Ausserdem steht dem Lüfter als Axiallüfter ein verhältnismässig grosser Lufteintrittsquerschnitt zur Verfügung, so dass Druckverluste vermieden werden. Die hohle Nabe des Axiallüfters behindert ausserdem nicht das Ansaugen des Kühlgases für die Blechpakete durch den Läufer. Auch hier ist die Querschnittsfläche für den Durchtritt des Kühlstromes für die Blechpakete gross, so dass ein Druckverlust zwischen Welle und Lüfterabdeckung fortfällt. Beide Kühlgasströme können sich infolge der als Trennrohr wirkenden Nabe nicht gegenseitig beeinflussen.

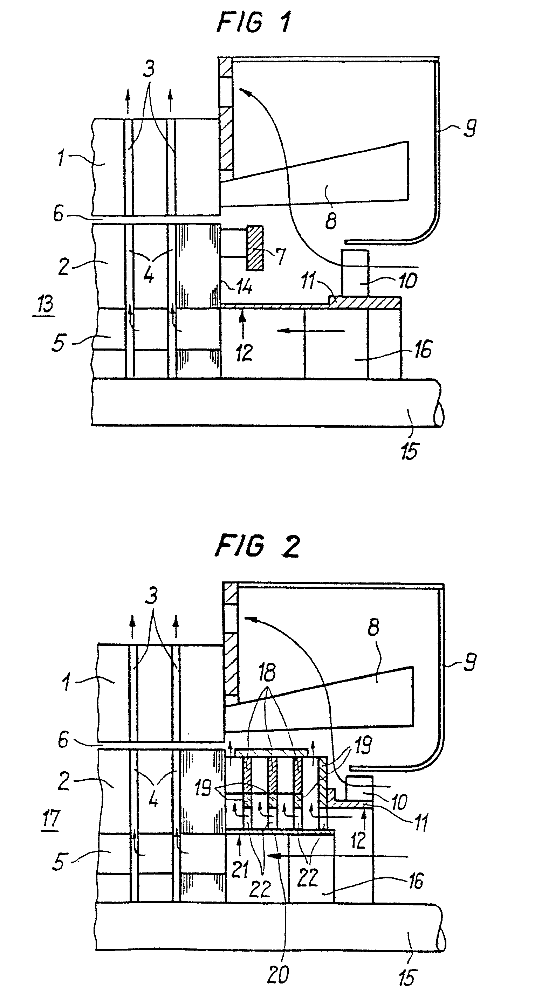

Im folgenden sei die Erfindung anhand der in den Fig. 1 und 2 der Zeichnung dargestellten Ausführungsbeispiele noch näher erläutert. Die Fig. 1 und 2 zeigen jeweils schematisch dargestellt einen Teil eines Längsschnitts durch eine gemäss der Erfindung ausgebildete elektrische Maschine.

Bei der in Fig. 1 dargestellten Asynchronmaschine sind sowohl im Ständerblechpaket 1 als auch im Läuferblechpaket 2 radial verlaufende Kühlkanäle 3 bzw. 4 vorgesehen. Das Läuferblechpaket 2 enthält ausserdem noch axiale Kühlkanäle 5 grossen Querschnitts, durch die infolge der Ventilationswirkung des Läufers die Kühlluft für die Kühlung des Läuferblechpaketes 2 und des ständerblechpaketes 1 angesaugt wird. Diese verteilt sich dann auf die einzelnen radialen Kühlkanäle 4, die sie durchströmt und dabei aus dem Läuferblechpaket 2 die Wärme abführt. Dann tritt die Kühlluft über den Luftspalt 6 in die Kühlkanäle 3 über und kühlt somit das Ständerblechpaket 1.

Der Läuferwickelkopf 7 und der Ständerwickelkopf 8 sind von einem getrennten Kühlluftstrom gekühlt. Zur besseren Führung dieses Kühlluftstromes ist der Raum des Ständerwickelkopfes 8 von einer Abdeckung 9 umgeben, die bis über den Luftspalt 6 der Asynchronmaschine herabgezogen ist. Zur Förderung dieses Kühlluftstromes dient ein Axiallüfter 10, der auf einer hohlen Nabe 11 angeordnet ist, deren Innendurchmesser 12 grösser als der Durchmesser ist, auf dem die axialen Kühlkanäle 5 des Läufers 13 liegen. Diese hohle Nabe 11, die bis an die Stirnfläche 14 des Läuferblechpaketes 2 herangeführt und dort befestigt ist, wirkt wie ein Trennrohr und verhindert eine ge-genseitige Beeinflussung der beiden Kühlluftströ-me. Der Axiallüfter 10 fördert nur den zur Kühlung des Läuferwickelkopfes 7 und Ständerwickelkopfes 8 benötigten Kühlluftstrom, deshalb sind seine Ventilationsverluste klein. Da der Innenquerschnitt der hohlen Nabe 11 sehr gross ist, kann der Läufer 13 ungehindert die für die Kühlung des Läuferblechpaketes 2 und des Ständerblechpaketes 2 benötigte Kühlluft ansaugen. Zur mechanischen Versteifung sind zwischen der Nabe 11 und der Läuferwelle 15 einige Rippen 16 vorgesehen.

Innerhalb der Nabe können zu den einzelnen axialen Kühlkanälen 5 führende Rohre angeordnet sein, die sich in axialer Richtung bis zur Stirnfläche der Nabe 11 erstrecken.

Mit einigen Abwandlungen ist die Erfindung auch bei einer elektrischen Synchronmaschine mit einem Vollpolläufer anwendbar, wie sie in Fig. 2 dargestellt ist. Für mit der Maschine nach Fig. 1 übereinstimmende Teile sind die gleichen Bezugszahlen beibehalten.

Bei einer derartigen Synchronmaschine mit einem Vollpolläufer 17 werden die konzentrisch zueinander liegenden Spulen der Läuferwicklung im Läuferwickelkopf 18 jeweils von Abstützelementen 19 getragen, die auf einem Tragrohr 20 angeordnet sind. Dieses ist gegenüber der Läuferwelle 15 durch Rippen 16 versteift. Der Innendurchmesser 21 des am Läuferblechpaket 2 befestigten Tragrohres 20 ist grösser als der Durchmesser, auf dem die axialen Kühlkanäle 5 liegen. Das Tragrohr 20 behindert somit nicht das Ansaugen der Kühlluft durch den Vollpolläufer 17 zur Kühlung des Läuferblechpaketes 2 und des Ständerblechpaketes 1. In den Abstützelementen 19 des Läuferwikkelkopfes 18 sind ausserdem axiale Kühlkanäle 22 für den Eintritt der Kühlluft in den Läuferwickelkopf 18 vorgesehen. Der Durchmesser dieser axialen Kühlkanäle 22 ist kleiner als der Innendurchmesser 12 der hohlen Nabe 11 des Axiallüfters 10, die an den Abstützelementen 19 befestigt ist. Der Axiallüfter 10 ist bei dieser Ausführung nur für die Förderung des Kühlluftstromes für den Ständerwickelkopf 8 bemessen.

## Patentansprüche

1. Eigenbelüftete elektrische Maschine, bei welcher auf jeder Maschinenseite der Wickelkopf (8) der Ständerwicklung durch einen Lüfter mit einem gasförmigen Kühlmittel beaufschlagt wird, der auf einer mit dem Läufer (13) verbundenen hohlen Nabe (11) angeordnet ist, die sich, insbesondere über Rippen (16) auf dem Läufer (13) abstützt und deren Innendurchmesser (12) grösser als der Durchmesser ist, auf dem axiale Kühlkanäle (5) des Läufers (13) liegen, die radial verlaufende Kühlkanäle (4, 3) im Läufer- und Ständerblechpaket (2, 1) mit dem von aussen angesaugten Kühlmittel versorgen, das nach Durchtritt des Läufers über den Luftspalt (6) in die radialen Kühlkanäle (3) des Ständerblechpaketes (1) übertritt, dadurch gekennzeichnet, dass der als Axiallüfter (10) aus-gebildete Lüfter hinter den Kühlmitteleintrittsöff-nungen liegt und nur den zur Kühlung des Wickelkopfes (8, 7) der Ständerwicklung und gegebenen-falls der Läuferwicklung notwendigen Kühlmittel-strom fördert, der nach dem Durchtritt über den Wickelkopf (8, 7) in den Aussenraum austritt, und dass der durch die axialen Kühlkanäle (5) des Läufers geführte, getrennte Kühlmittelstrom am Ständerrücken in den Aussenraum übertritt.

2. Eigenbelüftete elektrische Maschine nach Anspruch 1, dadurch gekennzeichnet, dass innerhalb der Nabe (11) zu den einzelnen axialen Kühlkanälen (5) führende Rohre angeordnet sind, die sich in axialer Richtung bis zur Stirnfläche der Nabe (11) erstrecken.

3. Eigenbelüftete elektrische Maschine mit Vollpolläufer nach Anspruch 1 oder 2, dadurch gekennzeichnet, dass die Abstützelemente (19) für den Läuferwickelkopf (18) auf einem Tragrohr (20) angeordnet sind, dessen Innendurchmesser (21) grösser als der Durchmesser ist, auf dem die axialen Kühlkanäle (5) des Läuferblechpaketes (2) liegen, und dass die Abstützelemente (19) axiale Kühlkanäle (22) für den Eintritt des Kühlmittels in den Läuferwickelkopf (18) aufweisen, die innerhalb der hohlen Nabe (11) des Axiallüfters (10) liegen, die an den Abstützelementen (19) befestigt ist.

## Claims

1. Self-ventilating electric machine, wherein on each side of the machine the winding head (8) of the stator winding is supplied with a gaseous coolant by a ventilator which is arranged on a hollow hub (11) which is connected to the rotor (13) and which rests on the rotor (13) in particular via ribs (16) and whose inner diameter (12) is greater than the diameter in which are arranged the axial cooling channels (5) of the rotor (13), which channels (5) supply radial cooling channels (4, 3) in the stack of rotor and stator laminations (2, 1) with the coolant which is sucked in from the exterior and which having passed through the rotor passes via the air gap (6) into the radial cooling channels (3) of the stack of stator laminations (1), characterised in that the ventilator which is designed as an axial ventilator (10) is arranged behind the coolant entry openings and conveys only that coolant flow which is necessary to cool the winding head (8, 7) of the stator winding and possibly of the rotor winding and which, having passed through the winding head (8, 7) emerges into the exterior, and that the separate coolant flow which passes through the axial cooling channels (5) of the rotor is transferred to the exterior of the rear of the stator.

2. Self-ventilating electric machine as claimed in claim 1, characterised in that within the hub (11) are arranged pipes which lead to the individual axial cooling channels (5) and which extend in the axial direction to the end surface of the hub (11).

3. Self-ventilating electric machine comprising a smoothcore rotor as claimed in claim 1 or 2, characterised in that the support elements (19) for the rotor winding head (18) are arranged on a bearing pipe (20) whose inner diameter (21) is greater than the diameter in which the axial cooling channel (5) of the stack of rotor laminations (2) is arranged, and that the support elements (19) possess axial cooling channels (22) for the entry of the coolant into the rotor winding head (18) which channels are located within the hollow hub (11) of the axial ventilator (10) said hub being attached to the support elements (19).

**Revendications**

1. Machine électrique à autoventilation, dans laquelle, sur chaque côté de la machine, la tête de bobine (8) de l'enroulement statorique est chargée par un milieu de refroidissement gazeux à l'aide d'un ventilateur monté sur un moyeu creux (11) qui est relié au moteur (13), moyeu creux qui prend appui sur le rotor (13), en particulier par l'intermédiaire de nervures (16), et dont le diamètre intérieur (12) est supérieur au diamètre au niveau duquel sont prévus des canaux axiaux de refroidissement du rotor (13), qui alimentent des canaux radiaux de refroidissement (4, 3) ménagés dans le paquet de tôles rotoriques et statoriques (2, 1), avec le milieu de refroidissement aspiré de l'extérieur et qui, après passage par le rotor, passe par l'intermédiaire de l'entrefer (16), dans les canaux radiaux de refroidissement (3) du paquet de tôles statoriques (1), caractérisée par le fait que le ventilateur qui est réalisé sous la forme d'un ventilateur axial (10) se situe derrière les ouvertures de l'admission du milieu de refroidissement et ne transporte que le courant du milieu de refroidissement qui est nécessaire pour le refroidissement de la tête de bobine (8, 7) de l'enroulement statorique et éventuellement de l'enroulement rotorique, lequel courant est évacué dans l'atmosphère, après passage sur la tête de bobine (8, 7), et que le courant du milieu de refroidissement séparé et passant par les canaux axiaux de refroidissement (5) du rotor passe dans l'atmosphère au niveau de la partie dorsale du stator.

2. Machine électrique à autoventilation selon la revendication 1, caractérisée par le fait qu'à l'intérieur du moyeu (11) sont disposés des tubes qui mènent aux différents canaux de refroidissement (5) et qui s'étendent en direction axiale jusqu'à la face frontale du moyeu (11).

3. Machine électrique à autoventilation et à rotor à pôles lisses selon la revendication 1 ou 2, caractérisée par le fait que les éléments d'appui (19) pour la tête de bobine rotorique (8) sont disposés sur un tube de support (20) dont le diamètre intérieur (21) est supérieur au diamètre au niveau duquel se situent les canaux axiaux de refroidissement (5) du paquet de tôles rotoriques (2), et que les éléments d'appui (19) comportent des canaux axiaux de refroidissement (22) pour l'entrée du milieu de refroidissement dans la tête de bobine rotorique (18) et qui se situent à l'intérieur du moyeu creux (11) du ventilateur axial (10), qui est fixé sur les éléments d'appui (19).

# FIG 1

# FIG 2